Europäisches Patentamt

European Patent Office

Office européen des brevets

(11) Numéro de publication: **0 319 399**
**A1**

## (12) DEMANDE DE BREVET EUROPEEN

(21) Numéro de dépôt: **88403002.4**

(22) Date de dépôt: **29.11.88**

(51) Int. Cl.⁴: **G 01 M 3/26**
**G 01 F 1/37**

(30) Priorité: **02.12.87 FR 8716719**

(43) Date de publication de la demande:
**07.06.89 Bulletin 89/23**

(84) Etats contractants désignés:
**AT BE CH DE ES GB IT LI LU NL SE**

(71) Demandeur: **SOCIETE NATIONALE INDUSTRIELLE AEROSPATIALE Société dite:**
**37 Boulevard de Montmorency**
**F-75781 Paris Cedex 16 (FR)**

(72) Inventeur: **Valy, Yves**
**41, rue Edouard Branly Les Artigons Isaac**
**F-33160 Saint-Medard-en-Jalles (FR)**

(74) Mandataire: **Barnay, André François**
**Cabinet Barnay 80 rue Saint-Lazare**
**F-75009 Paris (FR)**

(54) Dispositif détecteur de fuites pour circuit à circulation de fluide.

(57) Ce dispositif comprend deux ensembles analogues comportant chacun un tube de Pitot (9, 23) relié à un appareil (14) permettant la lecture de pressions différentielles, lesdits ensembles étant montés l'un à l'entrée et l'autre à la sortie dudit circuit (2, 3, 4, 5, 6) de manière que les tubes de Pitot soient disposés dans le courant de fluide circulant dans ledit circuit. Les tubes (13, 18) sont montés réglables en hauteur sur un support (14) et leurs branches reliées aux mêmes sorties des tubes de Pitot sont juxtaposées.

FIG. 1

EP 0 319 399 A1

# Description

## Dispositif détecteur de fuites pour circuit à circulation de fluide.

La présente invention est relative à la détection des fuites dans les circuits de transport de fluides liquides ou gazeux.

La détection des fuites de fluides dans les circuits de transport est un problème important dans la plupart des installations industrielles et qui est capital dans les secteurs techniques à haut risque, par exemple dans l'industrie chimique, les centrales nucléaires, les gazoducs, les oléoducs, etc., et les appareils de détection de fuites qui ont été mis au point doivent présenter une fiabilité élevées et sont par suite extrêmement sophistiqués et donc coûteux.

De nombreux systèmes ont été utilisés, faisant appel à l'acoustique, à l'électronique, à la chimie, à la radioactivité, à la mesure des pressions, etc.

Le but de l'invention est de fournir un détecteur de fuites de fluides, du type fonctionnant par mesure de pression, ayant une très haute sensibilité et qui soit en même temps de fabrication simple, peu coûteux et présente une très grande fiabilité.

Des détecteurs de fuites utilisant la mesure de la pression sont décrits par exemple par FR-A-2.490.818, dans lequel on utilise une analyse temporelle de la variation de pression qui se produit dans une conduite au moment de la fuite, avec des capteurs de pression. Ce système présente l'inconvénient d'un certain temps de réponse.

FR-A-2.344.009 décrit un dispositif comportant des capteurs de pression effective, des convertisseurs, des appareils de combinaison logiques soustractifs, une mémoire, un intégrateur, un écran d'affichage et un générateur de cadence.

Ce dispositif est compliqué et très coûteux en raison des nombreux appareils qu'il comporte.

Le brevet français n° 2.457.675 a pour objet un appareil à tubes de Pitot pour mesurer la vitesse d'écoulement des gaz respiratoires. Dans cet appareil, deux tubes de Pitot disposés côte à côte en regard de deux déflecteurs de sens inverses sont reliés à un manomètre différentiel pour fournir une mesure de l'écoulement du gaz dans deux sens opposés.

Dans la pratique, ces deux tubes de Pitot n'agissent que comme un seul. L'agencement à deux tubes côte à côte diminuant la résistance à l'écoulement et augmentant la sensibilité par rapport aux pneumotachographes à diaphragme, cet appareil ne peut pas être utilisé pour détecter une fuite.

L'invention a pour objet un dispositif détecteur de fuites pour un circuit dans lequel circule un fluide, caractérisé en ce qu'il comprend deux ensembles analogues comportant chacun un tube de Pitot relié à un appareil permettant la lecture de pression différentielles, lesdits ensembles étant montés l'un à l'entrée et l'autre à la sortie dudit circuit de manière que les tubes de Pitot soient disposés dans le courant de fluide circulant dans ledit circuit.

Suivant un mode préféré de réalisation de l'invention, lesdits appareils permettant la lecture de pression différentielle sont des tubes en U contenant un liquide en équilibre et les deux sorties de chaque tube de Pitot sont reliées aux deux extrémités dudit tube en U correspondant.

Suivant une autre caractéristique de l'invention, lesdits tubes en U sont montés verticalement l'un à côté de l'autre sur un support sur lequel ils sont réglables en hauteur.

Si on le désire, les tubes en U sont en une matière transparente afin de permettre d'observer les niveaux du liquide dans les branches correspondantes des tubes.

D'une façon commode, des électrodes sont disposées dans les branches des tubes en U en contact avec ledit liquide et sont reliées à un circuit électrique de mesure pour indiquer une variation des niveaux du liquide dans ces branches.

Pour améliorer la sensibilité du dispositif, l'une des branches de chaque tube en U est verticale et l'autre branche est inclinée par rapport à la première.

De façon avantageuse, lesdits tubes en U sont du type micromanomètre de Henry.

La description qui va suivre, en regard des dessins annexés à titre d'exemples non limitatifs, permettra de bien comprendre comment la présente invention peut être mise en pratique.

La figure 1 est une vue schématique d'ensemble d'un dispositif détecteur de fuites suivant l'invention dans son application au circuit de refroidissement d'une torche à plasma montée sur un haut fourneau.

La figure 2 est un schéma partiel d'un autre mode de réalisation comportant un circuit électrique de mesure du niveau du liquide dans les tubes en U.

La figure 3 montre un tube en U ayant une branche inclinée pour augmenter la sensibilité du dispositif.

La figure 4 est une vue d'un tube en U du type micromanomètre de Henry.

La figure 5 en est une variante.

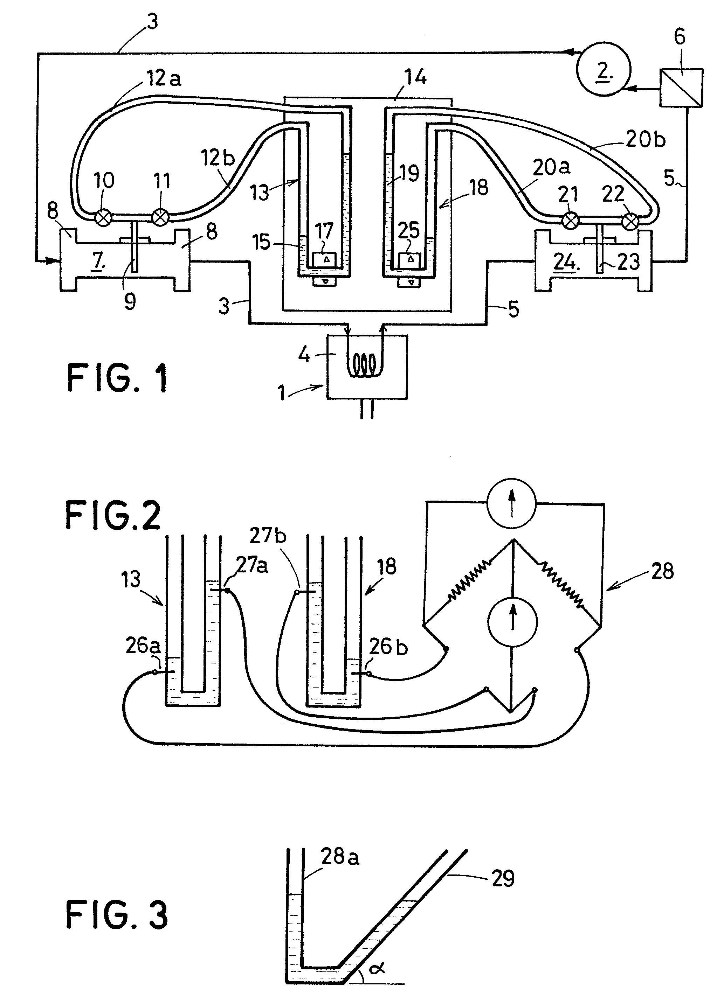

En se référant à la figure 1, les électrodes d'une torche à plasma 1 d'un haut fourneau sont refroidies au moyen d'un circuit dans lequel circule un agent de refroidissement qui, dans cet exemple, peut être de l'eau.

En raison de la température très élevée qui règne dans la zone de l'arc, tout défaut du circuit laisse fuir une eau qui est dissociée, et il en résulte un dégagement d'hydrogène qui peut très rapidement se retrouver au niveau du gueulard du haut fourneau, et il importe en conséquence que le circuit de refroidissement présente un degré de sécurité élevé.

Le circuit de refroidissement comprend une pompe 2 au refoulement de laquelle est relié un conduit 3 qui amène l'agent de refroidissement froid à l'entrée du système de refroidissement 4 de la torche 1.

L'agent de refroidissement sort chauffé du système 4 par un conduit 5 qui l'amène à un échangeur thermique 6 dans lequel il perd sa chaleur et revient enfin à l'admission de la pompe 2.

Suivant l'invention, dans le conduit d'entrée 3 est intercalé et raccordé un élément tubulaire 7 au moyen de brides 8. Dans cet élément est disposé un tube de Pitot 9 qui, dans ce cas, est par exemple une sonde "TORBAR INOX 316, type 311" commercialisée par la firme Techmark, dont les deux sorties de haute et basse pression sont munies de robinets d'isolement 10, 11, qui sont eux-mêmes branchés par des tuyaux 12a, 12b sur les extrémités d'un tube en verre 13 en U qui est monté sur un support 14 avec ses branches verticales, par l'intermédiaire d'un dispositif de type connu 17, par exemple à crémaillère, adapté pour permettre de régler la hauteur du tube en U sur son support 14.

Le tube en U 13 contient un liquide 15 teinté qui, comme connu en soi, est en équilibre dans des conditions de pressions égales aux extrémités des branches du tube 13.

Un dispositif identique comprenant un tube de verre 18 en U contenant un liquide teinté 19 et relié par des tuyaux 20a, 20b et des robinets d'isolement 21, 22 de haute et basse pression respectivement aux sorties d'un tube de Pitot 23, constitué par une sonde "Torbar" du même type disposée dans un manchon 24, est intercalé dans le conduit de sortie 5.

Le tube en U 18 est également monté réglable sur le support 14 au moyen d'un dispositif 25, les branches des tubes 13, 18, étant reliées aux sorties basse pression des tubes de Pitot 9 et 23 et étant juxtaposées.

On comprend bien entendu que les manchons 7 et 24 et les conduits d'entrée et de sortie 3 et 5 ont des sections identiques de sorte que, dans des conditions d'étanchéité du circuit, la vitesse du fluide est identique en entrée et en sortie et constitue ainsi un paramètre absolument fiable. Les tubes de Pitot 9 et 23 permettent, par mesure de la pression totale et de la pression statique, d'obtenir un signal différentiel lié à cette vitesse, et qui apparaît en différence de niveau dans les tubes en U 13 et 18.

On comprend également que le dispositif est préalablement réglé, en équilibre de pression, en amenant les niveaux des deux tubes à la même hauteur au moyen des dispositifs 17 et 25.

Toute différence de niveau du liquide apparaissant entre les branches en regard des tubes en U 13 et 18 révèle l'existence d'une fuite dant le circuit.

Dans l'application décrite du dispositif au circuit de refroidissement d'une torche à plasma ayant un débit de 20 m³/h la sensibilité obtenue est égale ou inférieure à 1/100.

D'une façon commode, et comme représenté à la figure 2, des électrodes métalliques 26a, 26b, 27a, 27b, peuvent être disposées à travers la paroi des tubes en U, en contact avec le liquide et reliées à un circuit en pont à résistance Wheatstone 28 fournissant une indication lorsque le niveau du liquide varie dans les tubes 13, 18 à la suite d'une fuite, en modifiant la résistance du trajet électrique entre les électrodes. Bien entendu il peut être prévu plus de deux électrodes par tube.

La sensibilité du dispositif peut être affinée en utilisant des tubes à liquide tels que représentés à la figure 3, ayant une branche haute pression verticale 28a et une branche 29 reliée à la sortie basse pression qui est inclinée d'un angle α. La sensibilité est augmentée d'un coefficient d'environ 1/sinα.

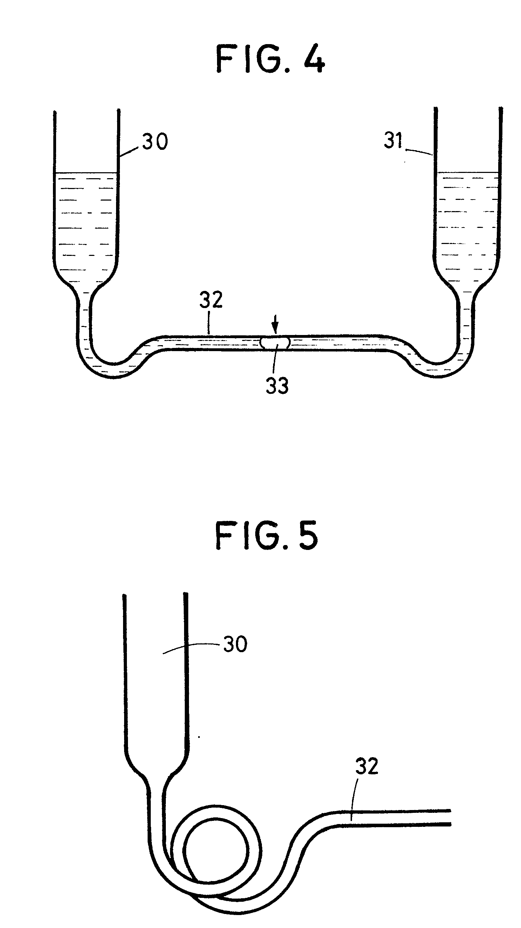

Suivant une autre variante représentée à la figure 4, on utilise un tube en U du type micro-manomètre de Henry dans lequel les deux branches verticales 30, 31 sont reliées par un tube intermédiaire horizontal 32 de section réduite renfermant une bulle d'air 33, et dans lequel le rapport choisi entre les sections des branches 30, 31 et de la partie intermédiaire 32 détermine l'amplification de l'information par une augmentation du déplacement de la bulle 33.

Pour limiter l'encombrement lié à un déplacement important de la bulle, la partie intermédiaire du tube peut être enroulée à chaque extrémité comme représenté à la figure 5.

Le dispositif suivant l'invention peut être utilisé dans toute installation comportant des fonctions de circulation d'un fluide liquide ou gazeux, et devant être protégée, et présentant de préférence une unité géographique.

## Revendications

1. Dispositif détecteur de fuites pour un circuit dans lequel circule un fluide, caractérisé en ce qu'il comprend deux ensembles analogues comportant chacun un tube de Pitot ( 9, 23) relié à un appareil permettant la lecture de pressions différentielles, lesdits ensembles étant montés l'un a l'entrée et l'autre à la sortie dudit circuit (2, 3, 4, 5, 6) de manière que les tubes de Pitot soient disposés dans le courant de fluide circulant dans ledit circuit.

2. Dispositif suivant la revendication 1, caractérisé en ce que lesdits appareils permettant la lecture de pressions différentielles sont constitués chacun par un tube en U (13, 18) contenant un liquide en équilibre, et les deux sorties de chaque tube de Pitot (9, 23) sont reliées aux deux extrémités du tube en U correspondant.

3. Dispositif suivant la revendication 1, caractérisé en ce que lesdits tubes en U (13, 18) sont montés verticalement l'un à côté de l'autre sur un support (14) sur lequel ils sont réglables en hauteur, indépendamment.

4. Dispositif suivant la revendication 3, caractérisé en ce que lesdits tubes en U (13, 18) sont identiques et sont montés sur le support (14) par l'intermédiaire de moyens (17, 25) de réglage en hauteur, les branches juxtaposées desdits tubes en U (13, 18) étant reliées chacune à la même sortie (haute ou basse pression) du tube de Pitot (9, 23) associé.

5. Dispositif suivant l'une quelconque des revendications 1 à 4, caractérisé en ce que les tubes en U (13, 18) sont en une matière transparente afin de permettre d'observer les niveaux du liquide dans les branches juxtaposées desdits tubes.

6. Dispositif suivant la revendication 5, caractérisé en ce que des électrodes (26a, 26b, 27a, 27b) sont disposées dans les branches de chaque tube en U, en contact avec ledit liquide et sont reliées à un circuit électrique (28) de mesure pour indiquer une variation des niveaux du liquide dans ces branches.

FIG. 1

FIG.2

FIG. 3

# FIG. 4

30

31

32

33

# FIG. 5

30

32

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 176 503 (B.E. ROBINSON)<br>* revendications 1-6 *<br>--- | 1-6 | G 01 M 3/26<br>G 01 F 1/37 |
| A | US-A-3 759 098 (H.G. LOGSDON et al.)<br>* colonne 1 *<br>--- | 1,2 | |
| A,P | US-A-4 715 232 (C.F. BUETTNER)<br>* revendications 1-19 *<br>----- | 1-6 | |

**DOMAINES TECHNIQUES RECHERCHES (Int. Cl.4)**

G 01 F 1/00
G 01 M 3/00

Le présent rapport a été établi pour toutes les revendications

| Lieu de la recherche | Date d'achèvement de la recherche | Examinateur |
|---|---|---|
| BERLIN | 28-02-1989 | DIETRICH A. |

EPO FORM 1503 03.82 (P0402)